# EUROPEAN PATENT APPLICATION

(11) **EP 4 122 678 A1**
(43) Date of publication of application: **25.01.2023**
(21) Application number: 21187129.8
(22) Date of filing: 22.07.2021
(51) Int. Cl.: B29C 64/118, B29C 64/393, B33Y 10/00, B33Y 50/02, B33Y 80/00

(54) **MANUFACTURING A THREE DIMENSIONAL OBJECT BY EXTRUSION BASED MODELLING**

(71) Applicant: Bond High Performance 3D Technology B.V., 7521 PK Enschede (NL)
(72) Inventor: Bouma, Harmen Willem, 7521 PK Enschede (NL); Koster, Tonnis Meindert, 7521 PK Enschede (NL); de Vries, Johannes Franciscus, 7521 PK Enschede (NL); Inanç, Bahri Sinan, 7521 PK Enschede (NL); Zult, Jelle David, 7521 PK Enschede (NL); Bartelds, Jan Teun, 7521 PK Enschede (NL); Kuiper-Hartman, Marloes Alexandra, 7521 PK Enschede (NL)
(74) Representative: Renkema, Jaap

(57) **Abstract**

In a method for manufacturing a three dimensional object by extrusion based modelling, tracks of modelling material are deposited in slices by means of a printhead connected to a three dimensional positioning system. In each slice a plurality of first tracks of three-dimensional modelling material is deposited by the printhead under a first pressure, wherein the first tracks are spaced apart so as to leave a gap between them. A second track of three-dimensional modelling material is deposited by the printhead in each of the gaps between the deposited first tracks under a second pressure, which is higher than the first pressure, such that the gaps are filled entirely. A monolithic body is formed by depositing the modelling material slice by slice. In at least a body portion of the monolithic body a pattern of first tracks and second tracks is deposited, in which the number of tracks that is deposited is increased within at least a section of the slices by depositing at least one additional first track and at least one additional second track.

## Description

### FIELD OF THE INVENTION

The invention relates to manufacturing a three-dimensional object by additive manufacturing, in particular extrusion based modelling, wherein tracks of modelling material are deposited in slices by means of a printhead connected to a three dimensional positioning system.

### BACKGROUND

In additive manufacturing objects are formed by layering modelling material in a controlled manner such that a desired three dimensional shaped object can be created. Very often the printer has a two or three dimensionally moveable printhead which dispenses the modelling material, while the printhead is moved over previously deposited tracks of the modelling material.

The object to be printed can be placed on a base. The printhead is movable in a three dimensional space relative to the object being modelled or printed. Various combinations are possible for moving the object on which the object is modelled relative to the printhead and vice versa.

The motions of the printhead and optionally the base are controlled by a control system which controls a controllable positioning system to which the printhead (and optionally base) is attached. By means of software a pattern of tracks can be designed, which pattern is used for moving the printhead and for depositing the tracks.

The object is created on a base structure in a reference location relative to the movable printhead. A preferred example of extrusion based modelling is fused deposition modelling (FDM), in which the modelling material fuses with previously formed tracks. The additive manufacturing material can be fed in the printhead in the form of for example filaments or rods, whereafter the modelling material is liquified in the printhead. The printhead dispenses the liquified modelling material from the printhead through a nozzle and deposits it on the base in the form of tracks forming a layer or a slice of tracks, or, if a previous layer of the object to be created has been deposited, on the object on previously deposited tracks where it is allowed to solidify and fuse with the previously deposited tracks.

The relative motion of the base and object to the printhead in tracks and simultaneous deposition of modelling material from the printhead allow the fused deposition modeled object to grow with each deposited track and gradually attains its desired shape. In current material extrusion printers the material is deposited in a feed forward, flowcontrolled way.

WO 2018/158426 discloses a method wherein tracks can be deposited while determining a parameter indicative of a pressure exerted on the modelling material and controlling the modelling material feeding means depending on the parameter indicative of the pressure exerted on the modelling material. In one embodiment two first tracks are deposited by a printhead using flow control, wherein the first two tracks are spaced apart, and wherein an intermediate second track is deposited between the two first tracks while controlling the pressure exerted on the modelling material.

In practical applications often more complex shapes are desired, in which the width of the material may require a variation which is not achievable by varying the respective track widths.

Therefore, it is an object of the invention to improve the known method in order to be able to manufacture leak tight or voidless objects with a complex shape by extrusion based modelling.

### SUMMARY OF THE INVENTION

According to one aspect of the invention a method is provided for manufacturing a three dimensional object by extrusion based modelling, wherein tracks of modelling material are deposited in slices by means of a printhead connected to a three dimensional positioning system, wherein in each slice:
- a plurality of first tracks of three-dimensional modelling material is deposited by the printhead under a first pressure, wherein the first tracks are spaced apart so as to leave a gap between them; and
- a second track of three-dimensional modelling material is deposited by the printhead in each of the gaps between the deposited first tracks under a second pressure, which is higher than the first pressure, such that the gaps are filled entirely;
whereby a monolithic body is formed by depositing the modelling material slice by slice;
wherein in at least a body portion of the monolithic body a pattern of first tracks and second tracks is deposited, in which the number of tracks that is deposited is increased within at least a section of the slices by depositing at least one additional first track and at least one additional second track.

By this method leak tight or voidless objects with a complex shape can be manufactured. If the object is a part which for example has a wall which needs to be leak tight, the mentioned wall needs to comprise at least three tracks, of which the intermediate track is printed with a higher pressure than the tracks lateral thereof. With three tracks a wall thickness can be achieved within a certain range. If, due to the design of the object, the wall thickness gradually exceeds the wall thickness that can be 3D printed with a certain odd number of tracks, with a minimum of three tracks, the method according to the invention proposes to make a transition to a higher number of printed tracks without introducing voids. The method is adapted to fill up any complex shape such that, apart from locations where tracks of the same type meet (e.g. at an end of a loop), there are, at least in a transitional body portion that has to be leak tight, never two tracks printed with low pressure adjoining each other, or tracks printed with high pressure adjoining each other.

If parts need to be leak tight or if outgassing is undesirable, but internal voids are acceptable, it is possible to print a wall using an even number of tracks, thus accepting that voids may occur where two first tracks printed with low pressure are printed adjacent to each other.

It is noted here that although a leak tight barrier in an object requires at least a pair of first tracks and a second track between the first tracks, the invention is by no means limited to objects having an odd number of tracks. Also objects at least partially printed with an even number of tracks are within the scope of the present invention.

Parts which are subjected to an ultra-high vacuum need to be voidless or at least the overall fraction of voids in a 3D printed object needs to be minimized, so as to avoid the gradual escape of gas molecules entrapped in the 3D printed object (known in the art as virtual leaks). To this end, a track printed with lower pressure under the nozzle should be adjoined by a track printed with higher pressure under the nozzle. With the method according to the invention it becomes possible to manufacture such parts having a complex shape.
Low pressure is a pressure sufficiently high to make a track of liquified modelling material under a stable flow from the nozzle. The track has a trackwidth close to the diameter d₀ of the nozzle orifice. The diameter d₀ of the nozzle orifice may typically be below 1mm. For example the trackwidth ranges between 0.8 * do and 1.4 * do, wherein the trackwidth preferably is 1,1*d₀. When the diameter of the nozzle orifice is for example 0.3 mm, typically the track width varies between 0.24 mm and 0.42 mm under flow control, while being printed at low pressure. When the diameter of a nozzle orifice is for example 0.6 mm, typically the track width varies between 0.48 mm and 0.84 mm under flow control, while being printed at low pressure.

High pressure is a pressure sufficiently high to fill the gap between two flow control printed tracks and leaving less than 5 vol% voids, preferably less than 1 vol% voids, more preferably less than 0.1vol%, or even less than 0.01 vol% voids. Preferably, the high pressure is at least 120% of the low pressure exerted on the liquified modelling material, more preferably between 125% and 2000% of the value of the low pressure.

The top surface of the second tracks is preferably higher than the top surface of the first tracks. The top surface of the second tracks is e.g. 20 µm above the top surface of the first tracks, which amounts to about 10% of the layer height. Preferably, the top surface of the second tracks is at least 5% of a layer height higher than the top surface of the first tracks, preferably between 5% and 20 % of a layer height higher. The pressure underneath the nozzle head can be derived by means of uplift force measured by an uplift force sensor associated with the nozzle head, which is subjected to lift forces when the tracks are printed. The second tracks are printed with a relatively high pressure compared to the first tracks, which causes the nozzle head, which is subjected to the pressure from below, to be lifted due to a finite stiffness of the printer structure. The additional distance that the nozzle head is lifted above the level of the top surface of the first tracks may be 20 µm, which already prevents that the nozzle head bumps into irregularities on the adjacent first tracks. Such bumping would create an upward force on the nozzle head and would be detected by the uplift force sensor, which would trigger signal changes which are unrelated to pressure changes below the nozzle. These signal changes are thus wrongly interpreted as pressure changes by the control system, which would eventually lead to errors in the dispensed flow of material. Thus, printing the second tracks at a higher pressure than the first tracks has as an advantageous effect, which is that it prevents that the nozzle head bumps into irregularities on the adjacent first tracks, which avoids disturbances in the control loop.

In the method according to the invention at least one of the second tracks and the two adjacent first tracks may be deposited in a closed contour. Depositing at least one pair of first tracks and an intermediate second track in a closed contour allows to manufacture tubular or vessel type parts, which have a wall enclosing the interior space of the tube or vessel, which is leak tight.

Preferably, the tracks having the closed contour are deposited in a continuous manner starting at a starting point and ending at said starting point to close the contour, wherein at least the starting point of the second track is offset with respect to the starting point of the adjacent first tracks. At the starting point, where the track loop is closed, so to say, the deposition of modelling material over the entire track width may show imperfections, which may cause voids. By positioning the starting points of the individual adjacent tracks in an offset manner, eventual voids caused by the imperfections at the starting point of the individual tracks are isolated from each other and cannot communicate with each other. Thereby leak tightness is warranted. Further the gaps between the first tracks deposited with flow control and low pressure are filled by the second tracks being printed with higher pressure, which will also fill the possible voids at the starting point of the first tracks.

The offset in track starting points can also be used advantageously with respect to different layers. In particular, a second track may be given a starting point offset from the starting point of a second track directly underneath, whereby a possible imperfection in the starting point in the second track of the underlying layer is filled in by the second track on top of it.

Possibly, in the method according to the invention, when a wall is built from an odd number of tracks, the odd number being Nₒ (e.g. three tracks of which two first tracks and one second track), the modelling material is deposited from a nozzle orifice of the printhead, said nozzle orifice having a diameter do, wherein at the transitional portion the wall thickness is increased with at least 110% x 2 x do.

Preferably, for increase at the transitional portion, an additional first track and an additional second track is added, preferably between one of the outer first tracks and the associated second track. Preferably, the additional first track is adjoined with one of the outer first tracks, but alternatively at the transitional portion in at least one of the second tracks a bifurcation may be formed to increase the number of second tracks.

Preferably, the first tracks are deposited using flow control and the second tracks are deposited using pressure control. Flow controlled and pressure controlled deposition of tracks of modelling material are as such described in WO 2018/158439. In summary, in flow control as mentioned here, the flow of the modelling material is kept constant, depending on thickness of the tracks to be deposited and the print speed. As part of the machine calibration, the material flow is calibrated. Flow control as mentioned here, is no feedback control. Pressure control as mentioned here, is a feedback control in which the pressure exerted on the modelling material is controlled by a feedback loop. The pressure under the nozzle head is measured and used as a feedback parameter to control the pressure of modeling material dispensed from the nozzle head. The flow of modelling material is thus varied depending on the measured pressure.

Flow controlled tracks may suffer from under-extrusion, i.e. the flow of modelling material can become too small to fill up the gap underneath the printing nozzle, thereby causing the occurrence of spaces if two of those flow controlled tracks adjoin each other, which would result in cavities in the printed object. The modelling material deposited with pressure control fills the open space between the first track and fuses with these previously deposited tracks, such that the first and second tracks form a continuous layer without gaps or cavities.

Preferably, fused deposition modelling (FDM) is used as extrusion based modelling, wherein the object is preferably made of a thermoplastic polymer composition, wherein the thermoplastic polymer is chosen from polyethylene, polypropylene, ABS, polycarbonate, polyamide and polyarylether ketones (PAEK) like for example polyether ketone (PEK), polyether ether ketone (PEEK), polyether ketone ketone (PEKK), polyether ether ketone ketone (PEEKK) and polyether ether ketone ether ketone ketone (PEKEKK) and combinations thereof, wherein, preferably, the thermoplastic polymer composition comprises at least 80 wt% of a PAEK, preferably at least 90 wt% of a PAEK, or the thermoplastic polymer composition comprises at least 80 wt% of a PEEK, preferably at least 90 wt% of a PEEK, more preferably 100 wt% PEEK.

Another aspect of the invention relates to a three-dimensional object made by additive manufacturing, comprising a monolithic body including at least a body portion having at least one transitional wall portion, wherein the monolithic body comprises at least one member that extends from the body portion and that joins the body portion at the transitional wall portion, and wherein said body portion has a porosity of less than 5 vol% as determined according to the porosity test defined below, wherein preferably the porosity is less than 1 vol%, more preferably less than 0.1 vol% or 0.01 vol%.

Non-limiting examples of practical embodiments of such three dimensional objects according to the invention are:
- Products for the oil and gas industry such as backup rings, pump housings or leak tight enclosures;
- Flotation devices, containing a combination of leak tight structures enveloping inner cavities, designed to give the structure a desired specific mass;
- Products for analytical instruments or semiconductor equipment such as manifolds, heat exchangers, ducts;
- Products for the energy market such as hydrogen- or helium tight vessels, tubing systems and batteries;
- Products for the medical market such as implants, more specifically spinal cages or cranial implants, or medical instrumentation;
- Products for filtration containing a combination of leak tight and porous structures.

It is noted that this list is only given as a non-limiting indication of practical applications.

In any case, the invention also relates to backup rings, pump housings, leak tight enclosures or other products for the oil and gas industry made by additive manufacturing, comprising a monolithic body including at least a body portion having at least one transitional wall portion, wherein the monolithic body comprises at least one member that extends from the body portion and that joins the body portion at the transitional wall portion, and wherein said body portion has a porosity of less than 5 vol% as determined according to the porosity test defined below, wherein preferably the porosity is less than 1 vol%, more preferably less than 0.1 vol% or 0.01 vol%.

The invention also relates to flotation devices, containing a combination of leak tight structures enveloping inner cavities, designed to give the structure a desired specific mass, made by additive manufacturing, comprising a monolithic body including at least a body portion having at least one transitional wall portion, wherein the monolithic body comprises at least one member that extends from the body portion and that joins the body portion at the transitional wall portion, and wherein said body portion has a porosity of less than 5 vol% as determined according to the porosity test defined below, wherein preferably the porosity is less than 1 vol%, more preferably less than 0.1 vol% or 0.01 vol%.

The invention also relates to products for analytical instruments or semiconductor equipment such as manifolds, heat exchangers, ducts, made by additive manufacturing, comprising a monolithic body including at least a body portion having at least one transitional wall portion, wherein the monolithic body comprises at least one member that extends from the body portion and that joins the body portion at the transitional wall portion, and wherein said body portion has a porosity of less than 5 vol% as determined according to the porosity test defined below, wherein preferably the porosity is less than 1 vol%, more preferably less than 0.1 vol% or 0.01 vol%.

The invention also relates to products for the energy market such as hydrogen- or helium tight vessels, tubing systems and batteries, made by additive manufacturing, comprising a monolithic body including at least a body portion having at least one transitional wall portion, wherein the monolithic body comprises at least one member that extends from the body portion and that joins the body portion at the transitional wall portion, and wherein said body portion has a porosity of less than 5 vol% as determined according to the porosity test defined below, wherein preferably the porosity is less than 1 vol%, more preferably less than 0.1 vol% or 0.01 vol%.

The invention also relates to products for the medical market such as implants, more specifically spinal cages or cranial implants, or medical instrumentation, made by additive manufacturing, comprising a monolithic body including at least a body portion having at least one transitional wall portion, wherein the monolithic body comprises at least one member that extends from the body portion and that joins the body portion at the transitional wall portion, and wherein said body portion has a porosity of less than 5 vol% as determined according to the porosity test defined below, wherein preferably the porosity is less than 1 vol%, more preferably less than 0.1 vol% or 0.01 vol%.

The invention also relates to products for filtration containing a combination of leak tight and porous structures, made by additive manufacturing, comprising a monolithic body including at least a body portion having at least one transitional wall portion, wherein the monolithic body comprises at least one member that extends from the body portion and that joins the body portion at the transitional wall portion, and wherein said body portion has a porosity of less than 5 vol% as determined according to the porosity test defined below, wherein preferably the porosity is less than 1 vol%, more preferably less than 0.1 vol% or 0.01 vol%.

### Porosity test procedure

### Optical setup

The optical setup consists of:
- A Basler acA1920-50 gm digital monochrome camera with a 1 1.3 mm x 7.1 mm sensor with 1920 x 1200 pixels.
- An Edmund Optics 1X, 40mm WD CompactTL^{™} telecentric lens 1x magnification and through the lens illuminator port.
- A Dolan-Jenner MI-150 Fiber Optic Illuminator with a 150 W lamp with 3250K color temperature configured to provide on-axis illumination.
- A Thorlabs GN2/M dual axis manual gonio stage with sample holder.

### Sample preparation

The sample shall contain an area of at least 15 mm x 10 mm printed with 100% infill The sample is potted in a puck to maintain flatness of the surface during polishing. The following potting material is used: 7 parts Streuers Specifix-20, with 1 part Streuers Curing agent and the sample is impregnated under vacuum.

The plane of the cross-section is perpendicular to the printing direction.

Both sides of the puck are grinded to make the planes parallel and to make a cross-section showing only the infilled area.

The grinding and polishing procedure with the Struers polisher and Struers consumables is:
- 80 grid: 150 seconds at 150 rpm and 20 N force;
- 800 grid: 120 seconds at 150 rpm and 20 N force;
- 1200 grid: 120 seconds at 150 rpm and 20 N force;
- 2000 grid: 120 seconds at 150 rpm and 20 N force;
- 4000 grid: 120 seconds at 150 rpm and 20 N force;
- 3 µm diamond paste: 180 seconds at 150 rpm and 25 N;
- 5 minutes ultrasonic cleaning;
- 1 µm diamond paste: 180 seconds at 150 rpm and 30 N;
- 10 minutes ultrasonic cleaning;
- Careful removal of remnants of the polishing step to obtain a clean surface.

While grinding, the grinding disc and sample area are flooded with cold flowing water in order to prevent sample heating to damage the surface texture. The samples are grinded until the surface is smooth and hardly any polishing scratches are visible under the microscope. Subsequently use polishing paste to remove remaining scratches. This polishing procedure is standard operation for a person skilled in the art.

### Imaging

Adjust both rotations of the manual rotating stage while observing the camera image such that the polished surface is exactly perpendicular to the optical axis of the optical system and the illumination light is exactly reflected into the camera, obtaining the highest brightness and contrast.

Adjust the shutter time of the camera such that:
- less than 1 % of the pixels are underexposed, i.e have an intensity of less than 1 % of the dynamic range, and
- less than 1 % of the pixels are overexposed, i.e. have an intensity of more than 99% of the dynamic range.

Images must be stored with full resolution and single channel grey image without image compression.

A solid piece of printed material should be visible inside the field of view, without the skin or the edge of the part being visible in the image.

Ensure at least 10 and no more than 25 tracks are imaged to the width of the image sensor.

Ensure at least 14 and no more than 40 layers are imaged to the height of the image sensor.

If the structure of the printed tracks is too large or too small to allow for this number of printed tracks or layers in the field of view, use a lens with similar optical properties but different magnification and scale the size of the sample accordingly.

### Image post processing

The following post processing procedure assumes that the cavities are dark colored and the print material in between is bright. The images are imported and processed as signed 16 bit integers.
1. Determine a variable R measured in pixels which is 1/10th of the short side of the image.
2. Create a copy of the image and apply a median filter to the copy of the original image with a square shaped structural element with width and height 2*R (or the nearest odd integer value if this is required by the implementation of the algorithm).
3. Subtract the filtered image from the image from step 2 and add a value of 20 to each pixel in the same step.
4. Check if the resulting image is not clipped according to the 1% criterion mentioned above. In case clipping occurs, adjust the illumination and shutter time and repeat the procedure.
5. Convert the resulting image to a binary image, converting each pixel with positive value to 1, and all other pixels to 0.
6. Perform region erosion with a disk shaped structural element with a radius of 1.5 pixels.
7. Perform region dilation with a disk shaped structural element with a radius of 3.0 pixels.
8. Perform region erosion with a disk shaped structural element with a radius of 1.5 pixels.
9. Crop the resulting image, leaving a square portion as large as the height of the original image.
10. Determine the number of black pixels with a pixel value of 0.
11. Determine the total number of pixels.
12. Calculate the porosity as the quotient of the number of black pixels and the total number of pixels, expressed in percent.

In a possible embodiment of the three-dimensional object, the at least one transitional wall portion has an increasing thickness. Advantageously 3D objects are provided by the invention wherein the porosity at transitional wall portions remains low while the changing thickness of the wall cannot be made by varying the width of printed individual tracks, but instead needs to be made by changing the number of tracks.

In a possible embodiment of the three-dimensional object said body portion of the monolithic body comprises a partition wall, said partition wall preferably having a closed contour and defining an internal chamber. Such an object may advantageously be used in applications where the partition wall needs to withstand a high pressure difference and needs to avoid migration of gasses/molecules through the partition wall, such as in applications under ultra-high vacuum in the semi-conductor industry. Also "virtual leaks" can be prevented, which is the gradual release of gasses/molecules, which are entrapped in voids in the object when the object is subjected to a ultra-high vacuum.

The partition wall has a thickness t ≥ tmin, which depends on the nozzle diameter. The minimum thickness tmin may for example be 0,72mm.

In a possible embodiment the partition wall has a leak tightness below 1x10⁻⁶ mbar·l/s, wherein the leak tightness is determined with the following leak test:

### Leak test

For testing the leak tightness, a test specimen with a cuboid shape of 20 mm x 20 mm x 2 mm is retrieved by sawing the specimen from a larger printed object.

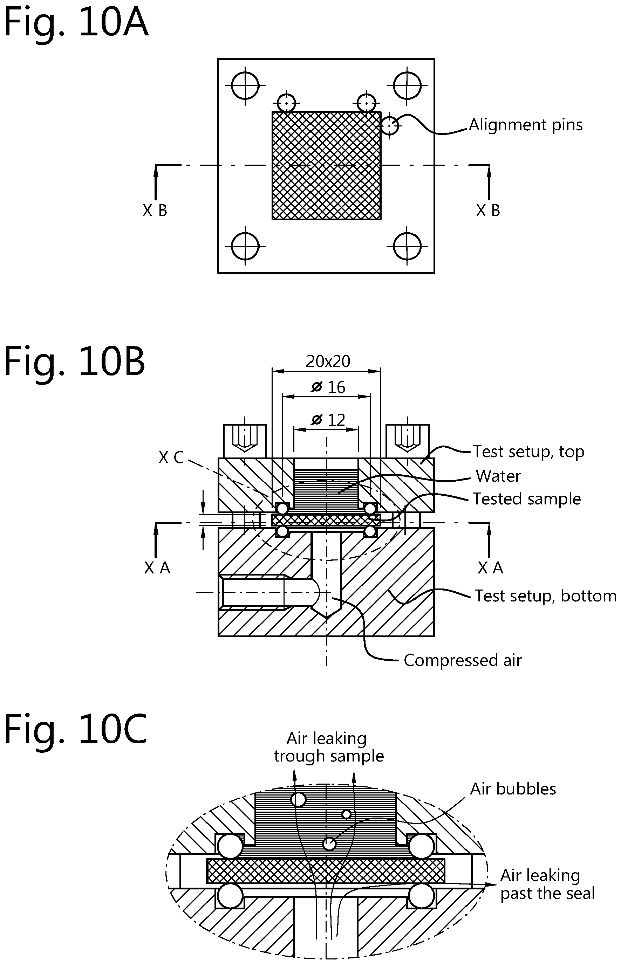

The test is performed with the test setup according to Fig. 10. The test sample is placed horizontally in the test setup. Above the test sample is water. Under the test sample is compressed air with an air overpressure of 6 bar. Leaking of air or water past the sample is prevented by O-rings with an inner diameter of 14 mm and an outer diameter of 19 mm. The construction of the setup is such that if the O-ring seal is imperfect, air will flow to the environment and will not lead to false detection of a leak through the sample.

While the sample is exposed to the test overpressure of 6 bar, the occurrence of air bubbles in the water is observed. If over a period of 10 minutes no air bubbles larger than Ø1 mm are observed, the sample is considered leak tight. The leak tightness value in mbar*l/s number can be calculated by estimating the total volume of the (assumingly spherical) air bubbles, multiplying this by the overpressure (6 bar) and dividing this by the test period (10 minutes). The diameter of the air bubbles can be measured with a suitable, calibrated digital camera.

In an embodiment of the invention a pressure vessel, a manifold or a duct is provided, which has a leak tightness < 1x10⁻⁵ mbar·l/s, preferably < 1x10⁻⁷ mbar·l/s, more preferably < 1x10⁻⁹ mbar·l/s.

In an exemplary embodiment of the invention a printed tube with an inner diameter of 10 mm, a wall thickness of 2 mm and a length of 245 mm was exposed to a vacuum tracer gas test, with helium used a tracer gas. The printed tube was not oriented orthogonal to the coordinate system of the printer, so in various slices varying wall thickness were present according to the invention. The measured leak rate, measured according to ISO20484, was less than 1x10⁻⁹ mbar·l/s.

Preferably the partition wall has an outgassing rate, measured with a residual gas analysis measurement of:
H₂O: 4.76x10⁻⁴ mbar·l/s
CₓH_{y} v: 2.26x10⁻⁷ mbar·l/s
CₓH_{y} nv: 4.87x10⁻⁸ mbar·l/s
N₂: 6.28x10⁻⁶ mbar·l/s
O₂: 6.93x10⁻⁶ mbar·l/s
Ar: 1.02x10⁻⁷ mbar·l/s
The three dimensional object may advantageously be a medical implantable device, preferably made of PEEK, wherein the monolithic body furthermore comprises a porous body portion having a porous structure to promote bone growth through said structure. In one specific embodiment the medical implantable device may be embodied as a spinal cage. In another specific embodiment the medical implantable device may be embodied as a cranial implant.

Such medical implantable devices can have one or more portions which need to withstand high loads, and furthermore can have portions which are required to be impermeable for (human/animal) body fluid or tissue, while other portions of the implant need to facilitate (human/animal) tissue growth, bone ingrowth for example. During fatigue tests, or in the actual application, the device may be exposed to dynamic loads, where internal voids - if present - would propagate under the dynamic load, ultimately resulting in catastrophic failure. According to the invention these different structures in the implant can be made by the extrusion based modelling, in particular FDM, wherein the low porosity as provided by the invention is used for example in the impermeable portions of the implant, whereby the implant is more resistant to dynamic loads.

### BRIEF DESCRIPTION OF THE DRAWINGS

Fig. 1 illustrates an FDM process, in figure 1A, a plurality of first tracks are deposited with low pressure. In figure 1B, second tracks with high pressure are deposited in between the first tracks
Figs. 2A and 2B illustrate FDM modelling providing different wall thickness by varying the track width,
Fig. 3 illustrates the deposition of tracks in a closed contour during an FDM process.
Fig. 4 illustrates a way to achieve a variation in wall thickness in an FDM process according to the invention,
Fig. 5 illustrates another way to achieve a variation in wall thickness in an FDM process according to the invention,
Fig. 6A shows a manifold formed by FDM method according to the invention
Fig. 6B shows the manifold of Fig. 6A during the manufacturing by FDM according to the invention,
Fig.6C shows a slice of the manifold of Fig. 6B where the material is deposited,
Fig. 7 illustrates how the slice of Fig. 6C is formed according to the invention,
Fig. 8 shows a medical implant made by a an FDM proces according to the invention, and
Fig. 9 shows a cross-section through the medical inplant of Fig. 8,
Fig. 10 shows a test setup for a leak test, and
Fig. 11 shows schematically an example of how different wall thicknesses can be achieved by printing different number of tracks.

### DETAILED DESCRIPTION

In an additive manufacturing process objects are formed by layering modelling material such that a desired three-dimensional (3D) shaped object is created. A practical way to form the 3D object is Fused Deposition Modelling (FDM) by means of a 3D printer. The 3D printer comprises a moveable printhead, which dispenses the modelling material in tracks. When a layer, comprising deposited tracks, is finished, the printhead is moved to deposit a next layer comprising tracks of depositing material on top of the previously deposited layer.

A pattern of tracks is designed by means of dedicated software. The software, which runs on a computer, allows to virtually divide a designed 3D object in slices, wherein in each slice a pattern of tracks is determined by the software. The pattern of tracks in each slice is used to move the printhead and depositing the tracks of modelling material in each layer of the printed object. In the following the terms "slice" and "layer" may be used interchangeably.

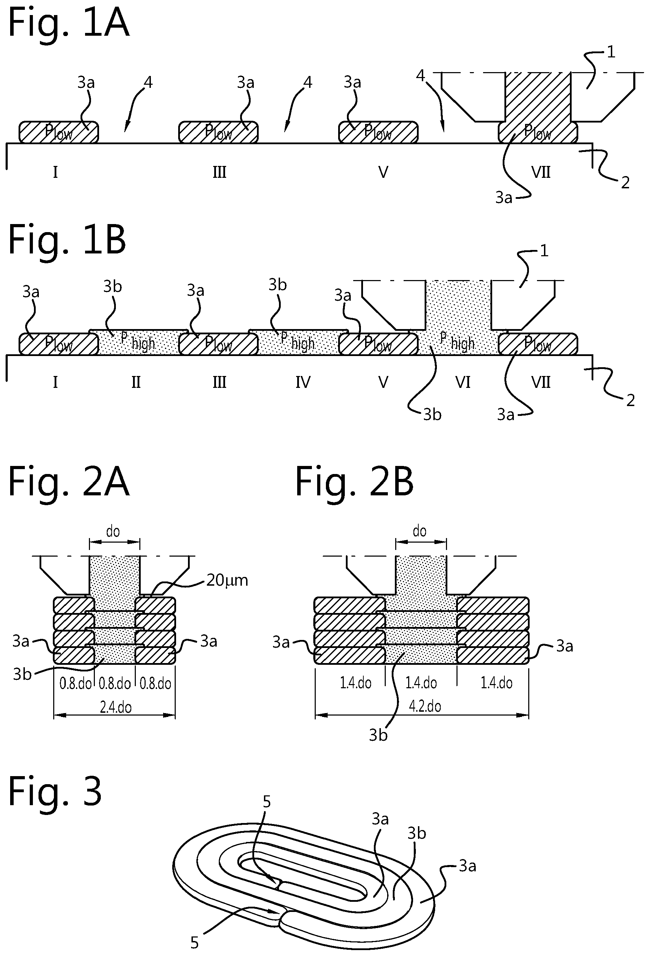

In Fig. 1 is shown how a layer or slice is formed. A printhead 1 deposits a track 3 of modelling material. In the figure a layer of modelling material is shown which, by way of example, contains seven tracks deposited next to each other on a base 2.

In a possible method, first, a set of tracks 3a of modelling material, which will be called "first tracks" in the following, is deposited by the printhead 1 at a first pressure. This is illustrated in Fig. 1A wherein first tracks 3a indicated by track numbers I, III, V and VII are deposited spaced apart from each other in an XY plane parallel to the base 2, thereby leaving intermediate spaces or gaps 4 between the tracks 3a.

Next, a set of tracks 3b, which will be called "second tracks" in the following, is deposited in the gaps 4 between the first tracks 3a. This is illustrated in Fig. 1B and these second tracks 3b are indicated with track numbers II, IV and VI. The modelling material is dispensed from the printhead 1 at a second pressure underneath the nozzle, which is higher than the first pressure. The higher pressure assures that the second tracks 3b form an infill in the spaces 4 between the first tracks 3a, whereby voids in the deposited layer of modelling material is kept to a minimum.

The movement and the dispensing of modelling material by the 3D printer is controlled by a control system based on the computer model developed by the above mentioned software.
Preferably, the first tracks 3a of modelling material are deposited using flow control and the second tracks 3b of modelling material are deposited using pressure control. When printing the first tracks 3a with flow control, the track is unbounded and the pressure is relatively low as a result. When printing the second tracks 3b with pressure control, the material is bounded by the previously printed first tracks 3a, and the pressure control loop is aimed at obtaining a high pressure for achieving voidlessness and strength. By controlling the pressure on the modelling material, variations in the gap size of the gaps 4 between the first tracks 3a is compensated, whereby these gaps 4 are nicely filled up.

The width of the first tracks 3a may be varied within a certain range. The width of the track 3a depends inter alia on the flow rate of the modelling material dispensed from the printhead and the travel speed of the printhead 1 moving along the designed pattern. In Figs 2A and 2B is shown a printhead 1 with a dispensing orifice having a diameter d₀. In practice, the diameter d₀ for printing thermoplastic materials may be 0,3 mm or 0,6 mm. Also other diameters are possible though. In Fig. 2A is shown a track width which is 0,8 * do. In Fig. 2B is shown a track width which is 1,4 * do. The width of the first tracks 3a can be varied within this range. Also the track width of the second tracks 3b may be varied within such a range.

There are several potential reasons for varying the width of tracks. For example, it is desired that the required local wall thickness is filled with an integer number of tracks. Furthermore, it may be desired to overcome a local increase or decrease in wall thickness preferably without changing the number of tracks to minimize Y-junctions in the printed pattern. Moreover, it may be desired to minimize the number of tracks to minimize print time and subsequently production cost. Also, it may be desired that the width of each track to be as close as possible to an optimal width (around 110-120% of d₀). Of course there may also be other reasons than the ones mentioned here.

In Fig. 3 is illustrated how a layer of modelling material is printed with three tracks having a closed contour. In this way an object having a tubular wall can be manufactured. In this example the inner and outer track are first tracks 3a; the intermediate track is a second track 3b, printed at a higher pressure as described in the above.

The inner and outer first tracks 3a have a clearly visible starting point 5, where the loop is closed by the printhead 1. As is visible the starting point 5 in the inner and outer first tracks 3a of modelling material may have some imperfections. The intermediate second track may be filled better at the starting point due to the fact that it is deposited with higher pressure. However, although not shown in Fig. 3, at the starting point of the second track 3b some imperfections may not be entirely avoidable. Therefore, it is preferred to arrange the starting points of the individual adjacent tracks 3a, 3b in an offset manner, as is shown in Fig. 3 for the tracks 3a. Thereby eventual voids caused by the imperfections at the starting point 5 of the individual tracks 3a, 3b are isolated from each other and cannot communicate with each other. This provides leak tightness. The gaps 4 (shown In Fig. 1A) between the first tracks 3a deposited with flow control and low pressure are filled by the second tracks 3b being printed with higher pressure, preferably with pressure control, which will also fill the possible voids at the starting point 5 of the first tracks 3a. Thereby a leak tight tubular body, e.g. a pipe or a vessel may be printed.

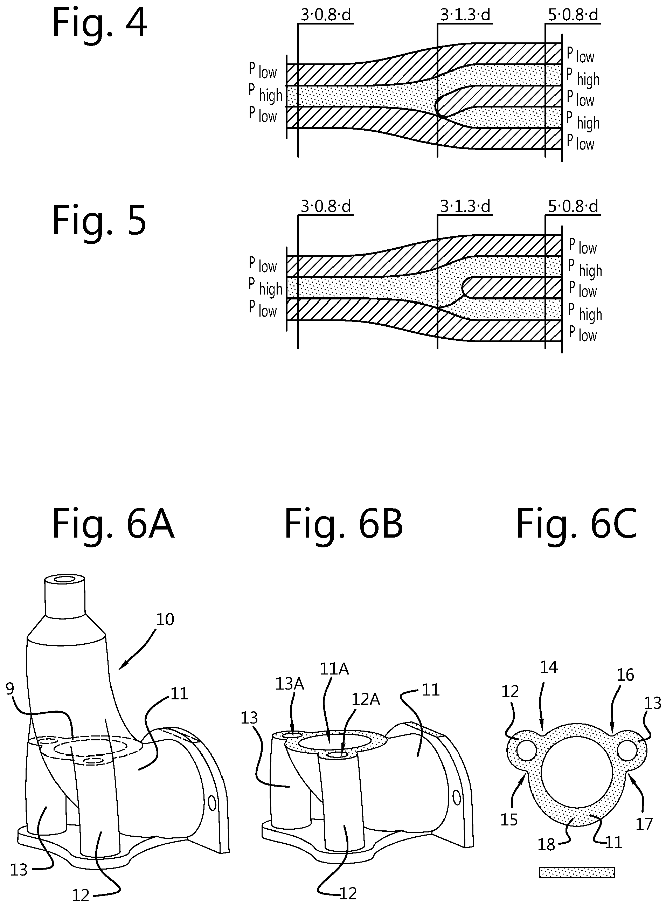

In Fig. 6A a manifold 10 is shown which is formed as a monolithic body. This manifold 10 is shown as an example of manufacturing a more complex body than printing a simple tubular body as is illustrated in Fig. 3. The manifold 10 comprises multiple tubular body portions 11, 12 and 13 defining passages 11A, 12A and 13A, respectively. The monolithic body includes partition walls 20, 21 between the passages 11A, 12A, 13A formed in the manifold, which need to be leak tight. Also the wall portions having an exterior wall surface can be considered as partition walls to the ambient environment, which also need to be leak tight. The tubular body portions adjoin whereby transitional wall portions 22, 23 are formed.

In Fig. 6B shows in a view in perspective how a cross-section is taken parallel to the base on which the manifold 10 is printed. The dashed lines in Fig. 6A indicated by reference numeral 9 indicates the cross-section in the manifold 10. Fig. 6C shows the cross-section. As can be seen from this cross-section the walls defining the tubular body portions 11, 12, 13 have varying thicknesses. At points where the tubular portions 11, 12, 13 adjoin each other, the monolithic body has transitional portions which are indicated in Fig. 6C with reference numerals 14, 15, 16 and 17. Also, at a region of the tubular portion 11, indicated by reference numeral 18, the wall thickness projected in the cross-section increases with respect to the other parts of the circumference, which is due to the curved shape of the tubular body portion 11 as can be derived from Fig. 6A. The actual wall thickness of the tubular portion 11, i.e. the wall thickness normal to the wall surface, may be constant at 18, but due to a projection on the cross-section, the projected wall thickness in the slice increases locally at 18. In other words, it is the area covered by the deposited material in the slice at 18 that increases.

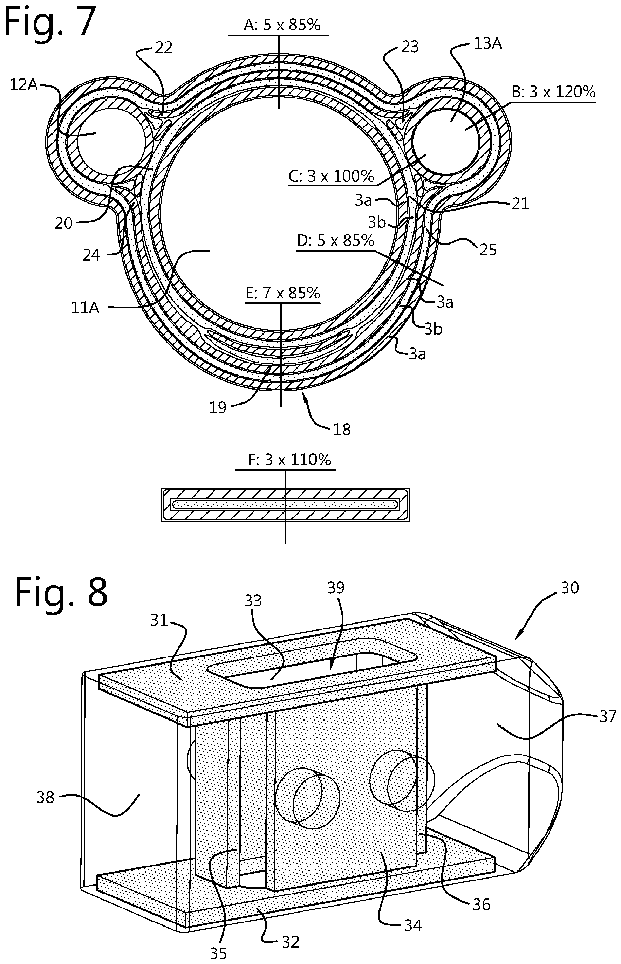

Fig. 7 shows an example of a pattern of tracks in the slice corresponding to the cross-section of Fig. 6C, which the software can determine according to the invention. The computer program is configured such that in the developed computer model of the 3D object, in this case the manifold, never two first tracks 3a or two second tracks 3b are next to each other, except where two of the same tracks meet. This ensures leak tightness of the final 3D printed part.

In some cross sections, for example cross section F, the presence of voids may be acceptable, so in these cross sections also an even number of tracks can be allowed, where one pair of first tracks printed with low pressure is printed adjacent to each other.

In the manifold 10, the tracks 3a, 3b are positioned such that the tubular body portions 11, 12 and 13 of the monolithic body are mutually leak tight and leak tight towards the exterior. In Fig. 7 the hatched tracks are the first tracks 3a, and the shaded tracks are the second tracks 3b.

As this example of the manifold 10 makes clear, not all variations in wall thickness in the slice, necessary to form the slice, can be made with variations in track width of the individual tracks alone. Therefore, according to the invention, in some of the body portions of the monolithic body of the manifold 10, the number of tracks that is deposited in a section of the slice (in Fig. 7 for example section 18) is increased. For example in section 18 is illustrated that at a region 19 an additional first track and an additional second track are added.

In Fig. 4 is shown in more detail how an additional first track 3a' and an additional second track 3b' are added. What this figure illustrates is that at a left side the width of the first tracks 3a and the second track 3b together have a minimum width of 3 * 0,8 * d = 2,4 * d, wherein d is the diameter of the nozzle orifice of the printing head 1. Progressing towards the right in the drawing, the track width of the individual first tracks 3a and the second track 3b increases, whereby the total width increases to 3 * 1,3 * d as is indicated at the centre of the drawing. To achieve a further increase in width an additional first track 3a' is introduced between the initial first tracks 3a. Between the additional first track 3a' and the first track 3a shown at the bottom of the drawing, an additional gap is created which is filled in by the additional second track 3b'. As an example, the five tracks after the additional first track 3a' and second track 3b' have been added, have a total width of 5 * 0,8 * d = 4 * d. This width could be initially increased further by increasing the track width of the individual tracks 3a, 3a', 3b and 3b'. Of course the total width could also be reduced by stopping the additional first track 3a' and additional second track 3b'. This is for example shown in Fig. 7.

In the example of Fig. 4 the starting point of the additional first track 3a' adjoins one of the first tracks 3a at the outer sides. These tracks 3a' and 3a may not join each other perfectly, however the second tracks 3b and 3b', which are deposited at a higher pressure will fill in the imperfections whereby voids are prevented as much as possible.

In Fig. 5 is shown an alternative way to add an additional first track 3a' and an additional second track 3b'. This is made by adding an additional first track 3a' between two first tracks 3a, which additional first track 3a' does not adjoin the other first tracks 3a. Thereby a bifurcated gap is formed between the first tracks 3a, 3a'. The bifurcated gap is filled in at a higher pressure (preferably pressure controlled) by the printer such that second tracks 3b, 3b' are formed. Since the over-extrusion of track 3b at the bifurcation has a limited speed, the material is not expelled far into the gap between track 3a' and the lower track 3a.

It is the present insight of the applicant that the second tracks 3b and 3b' in subsequent layers also play a role in reducing voids in the underlying layer, both in the examples of Fig. 4 and Fig. 5.

The method according to the invention is suitable to form objects/parts which need to be voidless or have at least a minimum fraction of voids. The overall fraction of voids in a body portion of a 3D object made by extrusion based modelling can be expressed in a parameter called "porosity". The porosity is determined by a porosity test procedure described in this application on pages 8-11.

A "complex" three-dimensional object made by additive manufacturing comprises a monolithic body including at least a body portion having at least one transitional wall portion. The monolithic body comprises at least one member that extends from the body portion and that joins the body portion at the transitional wall portion. In the example of the manifold of Figs 6 and 7, the wall of the tubular body portion 12 adjoins the wall of the tubular body portion 11 and the tubular wall of body portion 12 extends from the tubular wall of the body portion 11. The body portions 11, 12 are formed in one piece. The wall portions indicated for example in Fig. 7 by reference numerals 18, 22, 23, 24, 25 are typical transitional wall portions.

The body portion 11 of the monolithic body 10 comprises a partition wall, which is the tubular wall having a closed contour formed by layers of tracks 3a, 3b, 3a, 3b'. The partition wall of the tubular body portion 11 defines the internal chamber 11A, which in this example is a passage. The partition wall of the tubular body portion 11 in this example constitutes a partition between the internal chamber 11A and the exterior of the manifold, or constitutes a partition between the internal chamber 11A and the other internal chambers/passages 12A, 13A of the manifold 10. Such a partition needs to have low porosity to assure for example leak tightness. The leak tightness achievable by the invention is below 1x10⁻⁶ mbar·l/s, determined with a leak test as described on page 11 of this application.

Manifolds, such as the one shown in Fig. 6A, but also pressure vessels may be manufactured having a leak tightness below 1x10⁻⁵ mbar·l/s, preferably 1x10⁻⁷ mbar·l/s, more preferably 1x10⁻⁹ mbar·l/s determined with a standardized helium leak test according to ISO 20484.

For manifolds, such as the one shown in Fig. 6A, but also for pressure vessels the resistance to a high internal pressure is often required on top of the leak tightness. With the present invention such parts can be made having a high burst pressure. As an example, a vessel can be made having a diameter of 30 mm and a wall thickness of 1.4 mm which fails at 115 bar internal pressure (i.e burst pressure).

At the transitional wall portion of the partition wall, the thickness of the partition wall increases, and it may be necessary to increase the thickness beyond what increase is achievable by means of track width variation alone. The thickness is measured in a plane parallel to the base 2, thus in a plane parallel to the layers/slices of the object. In order to increase the thickness beyond what increase is achievable by means of track width variation, the method described above, in which additional first tracks 3a' and second track 3b' is advantageously used.

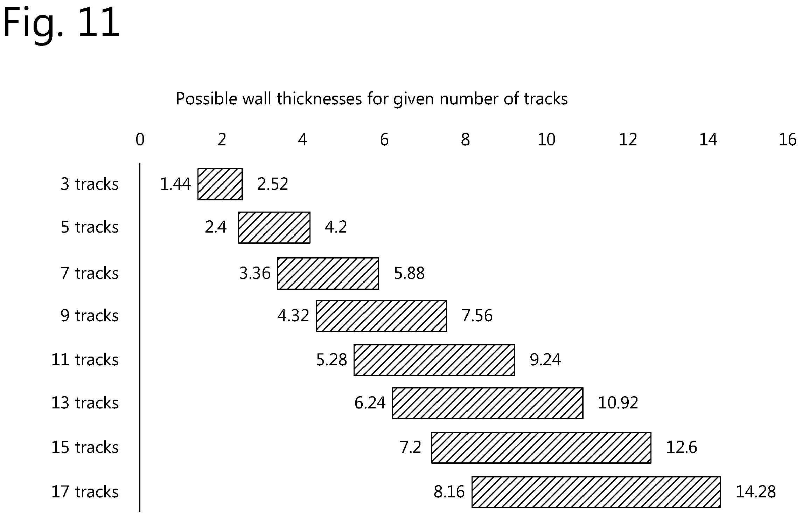

Fig. 11 shows an example scheme which illustrates how different wall thicknesses can be achieved with different numbers of tracks with a nozzle diameter do of 0.6 mm and the assumption that the track width that can be printed is within the range between 0.8*d₀ and1,4*d₀. The scheme illustrates the overlap of thickness ranges of different number of tracks. It also illustrates where the number of tracks has to be changed, which is typically where a thickness range for a certain number of tracks ends and a switch has to be made to another number of tracks. It is noted that the number of tracks may not necessarily be increased by two, but also may be increased by four or more. For example, eleven tracks provides a maximum thickness 9.24 mm. The overlap of 9.24 mm with thirteen, fifteen and seventeen tracks indicates that the number of tracks may be increased by two, four or six tracks. Another example from the scheme: the three-track range only has an overlap with the five-track range, thus there only one switch to another number of tracks is possible. The optimal switch to another number of tracks can be determined by the software designing the computer model of the object to be printed.

In practice, the track width is preferably about 110% of the diameter of the nozzle orifice do. That means that each track width may be increased about 30% of do. Thus, if the thickness of the partition wall has to be increased more than N times the 30% of do, wherein N is the number of tracks, there are added two additional tracks 3a' and 3b'.

The present invention provides complex 3D objects made by extrusion based modelling in which the body portion, e.g. the tubular body portion 11 of the manifold 10 shown in Figs 6 and 7, has a low porosity, i.e. the body portion has a low percentage of voids in the printed modelling material. A low porosity may be less than 5 vol% as determined according to the porosity test procedure defined on pages 8-11 of this application. Preferably the porosity is less than 1 vol%, more preferably less than 0.1 vol% or 0.01 vol%, depending on the specific application of the printed 3D object.

A practical application may for example be the manufacturing of medical implants. In particular such medical implants may be printed of PEEK by the 3D printer, because PEEK is a thermoplastic material which has favourable properties making it suitable for use in a human/animal body. In this regard some favourable properties of PEEK are:
- It is transparent for radiological imaging, so the physician can observe potential ailments in the body behind the implant.
- It does not have the safety concerns regarding MRI scanning which certain metal implants have due to the interaction with the strong magnetic field.
- It has a Youngs modulus close to the Youngs modulus of cortial bone. Therefore, the surrounding bone is allowed to flex under load with the implant, stimulating the self healing effect of the bone.
- It has a low thermal conductivity, which is improves the comfort of large implants. For example, metal cranial implants are heated in direct sunlight, metal knee replacements tend to give the patient a very cold feeling in cold environments. Both are uncomfortable. This is avoided by the use of PEEK.

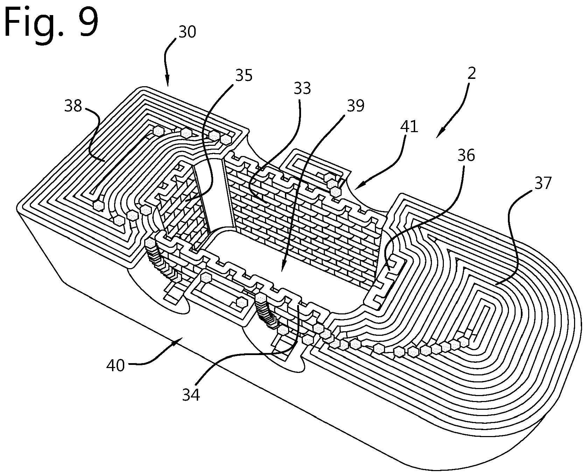

In Figs. 8 and 9 an example of a medical implant is shown. In particular a spinal cage 30 is shown, preferably made of PEEK by an FDM method according to the invention. The spinal cage 30 is to be placed between the bodies of two adjacent vertebrae, inserted in cavities created at the location of or in the intervertebral disc that typically occupies this space. One of the functions of the spinal cage is promoting a solid fusing of the adjacent vertebral segments by promoting bone growth (in the art is also referred to "interbody spinal fusion").

The spinal cage 30 is manufactured as a monolithic body having a passage 39 through which bone fusion is intended. In Fig. 8 darker coloured body portions 31-36 are visible which are porous structures deliberately containing voids. These porous body portions 31-36 contain voids to promote bone growth. The lighter coloured body portions 37, 38 are solid and have a low porosity in terms of the porosity test procedure described on page 8-11. The body portions 37 and 38 are interconnected by walls 40, 41 flanking te passage 39. The walls 40, 41 are lined on the side facing the passage 39 with the porous body portions 33 and 34. For example at the location where the walls 40, 41 adjoin the body portions 37, 38 a transitional wall portion is present. Also at these transitional wall portions in the spinal cage, which is mentioned here merely as a practical example, a low porosity as defined in the earlier mentioned porosity test procedure can be warranted.

In Fig. 9 is shown how the computer program makes the sliced computer model of the spinal cage 30. The body portions 33-36 containing voids are visible and form a lining on the inner side of the spinal cage 30 at the passage 39.

The body portions 38, 39 have the typical pattern of alternating first tracks and second tracks of modelling material as achieved with the method according to the invention, described in the above. These body portions 38, 39 are solid structures which have to bear the loads in the spine and which have a low porosity. The low porosity is advantageous in terms of avoiding growth of bacteria and avoiding growth of bone at those body portions. Furthermore, these body portions can be exposed to dynamic loads. In the dynamically loaded body portions 38, 39 the voids can act as a crack initiator, which will reduce the fatigue strength of the spinal cage. Therefore a low porosity, thus a low number of voids is advantageous.

The example of the spinal cage shows that the invention provides the possibility to determine very accurately where porous and non-porous body portions are deposited by the FDM method. Thus, one is very flexible in designing 3D objects having a monolithic body in which body portions may have different properties, such as strength, leak tightness, porosity to fulfil different functions.

## Claims

1. Method for manufacturing a three dimensional object by extrusion based modelling, wherein tracks of modelling material are deposited in slices by means of a printhead connected to a three dimensional positioning system, wherein in each slice:
• a plurality of first tracks of three-dimensional modelling material is deposited by the printhead under a first pressure, wherein the first tracks are spaced apart so as to leave a gap between them; and
• a second track of three-dimensional modelling material is deposited by the printhead in each of the gaps between the deposited first tracks under a second pressure, which is higher than the first pressure, such that the gaps are filled entirely; whereby a monolithic body is formed by depositing the modelling material slice by slice; wherein in at least a body portion of the monolithic body a pattern of first tracks and second tracks is deposited, in which the number of tracks that is deposited is increased within at least a section of the slices by depositing at least one additional first track and at least one additional second track.

2. Method according to claim 1, wherein the first tracks are deposited using flow control and the second tracks are deposited using pressure control.

3. Method according to claim 1 or 2, wherein at least one of the second tracks and the two adjacent first tracks are deposited in a closed contour.

4. Method according to claim 3, wherein the tracks having the closed contour are deposited in a continuous manner starting at a starting point and ending at said starting point to close the contour, and wherein at least the starting point of the second track is offset with respect to the starting point of the adjacent first tracks.

5. Method according to any of the claims 1-4, wherein the modelling material is deposited from a nozzle orifice of the printhead, said nozzle orifice having a diameter dₒ, and wherein at the transitional portion the wall thickness is increased with at least 110% x 2 x do.

6. Method according to claim 5, wherein at the transitional portion an additional first track and an additional second track is added, preferably between one of the outer first tracks and the associated second track.

7. Method according to claim 6, wherein the additional first track is adjoined with one of the outer first tracks.

8. Method according to claim 6, wherein at the transitional portion in at least one of the second tracks a bifurcation is formed to increase the number of second tracks.

9. Method according to any of the preceding claims, wherein the first tracks and second tracks have a layer height and a top surface, wherein the top surface of the second track is deposited at least 5% of said layer height higher than the top surface of the adjoining first tracks in the same slice, preferably between 5% and 20 % of said layer height higher.

10. Method according to any of the preceding claims, wherein fused deposition modelling (FDM) is used as extrusion based modelling.

11. A three-dimensional object made by additive manufacturing, comprising a monolithic body including at least a body portion having at least one transitional wall portion, wherein the monolithic body comprises at least one member that extends from the body portion and that joins the body portion at the transitional wall portion, and wherein said body portion has a porosity of less than 5 vol% as determined according to the porosity test defined on page 8-11, wherein preferably the porosity is less than 1 vol%, more preferably less than 0.1 vol% or 0.01 vol%.

12. Object according to claim 11, wherein the at least one transitional wall portion has an increasing thickness, wherein said body portion of the monolithic body comprises a partition wall, said partition wall preferably having a closed contour and defining an internal chamber, and wherein preferably the partition wall has a leak tightness below 1x10⁻⁶ mbar.l/s.

13. Object according to claim 11 or 12, wherein the object is a pressure vessel or a manifold, wherein the object has a leak tightness below 1x10⁻⁵ mbar·l/s, preferably below 1x10⁻⁷ mbar·l/s, more preferably below 1x10⁻⁹ mbar·l/s determined by a helium leak tightness test.

14. Object according to any of the claims 12-13, wherein the partition wall has a total outgassing rate, measured by residual gas analysis of below 1x10⁻³ mbar·l/s, or preferably below 5x10⁻⁴ mbar·l/s

15. Object according to claim 11, wherein the object is a medical implantable device, preferably made of PEEK, and wherein the monolithic body furthermore comprises a porous body portion having a porous structure to promote bone growth through said structure, and wherein the medical implantable device preferably is a spinal cage or a cranial implant.
